(19) Europäisches Patentamt / European Patent Office / Office européen des brevets

(11) **EP 4 242 884 B1**

(12) **FASCICULE DE BREVET EUROPEEN**

(45) Date de publication et mention
de la délivrance du brevet:
**31.12.2025 Bulletin 2026/01**

(21) Numéro de dépôt: **23158814.6**

(22) Date de dépôt: **27.02.2023**

(51) Classification Internationale des Brevets (IPC):
*G06F 21/10* (2013.01)     *G06F 21/60* (2013.01)
*H04L 9/40* (2022.01)     *H04W 12/10* (2021.01)

(52) Classification Coopérative des Brevets (CPC):
**H04L 63/04; G06F 21/10; G06F 21/60; H04W 12/10**

(54) **PROCÉDÉ DE PROTECTION CONTRE LES ATTAQUES PAR CANAUX AUXILIAIRES**

VERFAHREN ZUM SCHUTZ GEGEN SEITENKANALANGRIFFE

METHOD FOR PROTECTION AGAINST SIDE-CHANNEL ATTACKS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **07.03.2022 FR 2201933**

(43) Date de publication de la demande:
**13.09.2023 Bulletin 2023/37**

(73) Titulaire: **Commissariat à l'Energie Atomique et
aux Energies
Alternatives
75015 Paris (FR)**

(72) Inventeurs:
• SAVRY, Olivier
  38054 GRENOBLE cedex 09 (FR)
• TALAKI, Ezinam-Bertrand
  38054 GRENOBLE cedex 09 (FR)

(74) Mandataire: **INNOV-GROUP
209 Avenue Berthelot
69007 Lyon (FR)**

(56) Documents cités:
US-A- 5 859 912     US-A1- 2012 297 110
US-A1- 2017 214 523     US-A1- 2019 349 187

**Description**

L'invention concerne un procédé de protection contre les attaques par canaux auxiliaires d'un calculateur électronique. Elle concerne également un calculateur électronique pour la mise en œuvre de ce procédé.

Typiquement, les calculateurs électroniques comportent un support de stockage d'informations, tel qu'une mémoire principale, et un système sur puce qui exécute des instructions enregistrées dans cette mémoire principale afin de traiter des données. Les données sont généralement également enregistrées dans cette mémoire principale. Les systèmes sur puce sont plus connus sous l'acronyme SOC (*« System On Chip »*). Un tel système sur puce comporte généralement une ou plusieurs mémoires caches internes, une unité centrale de traitement et un ou plusieurs bus internes raccordant la ou les mémoires caches internes à l'unité centrale de traitement.

L'unité centrale de traitement est plus connue sous l'acronyme CPU (*«Central Processing Unit»*).

Pour protéger les données qui transitent entre la mémoire principale et le système sur puce, il est connu de les chiffrer. Dans ce cas, les données déplacées de la mémoire principale vers le système sur puce sont déchiffrées en entrée du système sur puce et transitent ensuite en clair sur les bus internes du système sur puce.

Dans ce texte, une donnée "en clair" désigne une donnée qui n'est pas protégée et qui est donc directement exploitable sans au préalable être déchiffrée ou démasquée.

Il est très difficile d'aller lire une donnée dans la mémoire cache interne d'un système sur puce. Par contre, il a été constaté que les valeurs des données en clair qui transitent sur les bus internes du système sur puce peuvent assez facilement être obtenues en mettant en œuvre une attaque par canaux auxiliaires (*«Side-channel attack»* en anglais).

De l'état de la technique est connu de US2012/297110A1, US2017/214523A1, US5859912A et US2019/349187A1. Aucun de ces documents ne décrit la solution revendiquée.

L'invention vise à rendre plus difficiles de telles attaques par canaux auxiliaires. Elle a donc pour objet un procédé de protection conforme à la revendication 1.

Elle a également pour objet un calculateur électronique pour la mise en œuvre de ce procédé.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'un calculateur électronique;
- la figure 2 est un organigramme d'un procédé de protection contre les attaques par canaux auxiliaires mis en œuvre dans le calculateur électronique de la figure 1;
- la figure 3 est une illustration schématique de l'architecture d'un générateur de masques mis en œuvre dans le calculateur de la figure 1;
- la figure 4 est une illustration de l'architecture d'un mot qui circule sur des bus mis en œuvre dans le calculateur de la figure 1;
- la figure 5 est un organigramme d'un autre mode de réalisation d'un procédé de protection contre les attaques par canaux auxiliaires susceptible d'être mis en œuvre dans le calculateur de la figure 1.

Dans la suite de cette description, les caractéristiques et fonctions bien connues de l'homme du métier ne sont pas décrites en détail.

Dans cette description, des exemples détaillés de modes de réalisation sont d'abord décrits dans un chapitre I en référence aux figures. Ensuite, dans un chapitre II, des variantes de ces modes de réalisation sont présentées. Enfin, les avantages des différents modes de réalisation sont introduits dans un chapitre III.

Chapitre I : Exemples de modes de réalisation

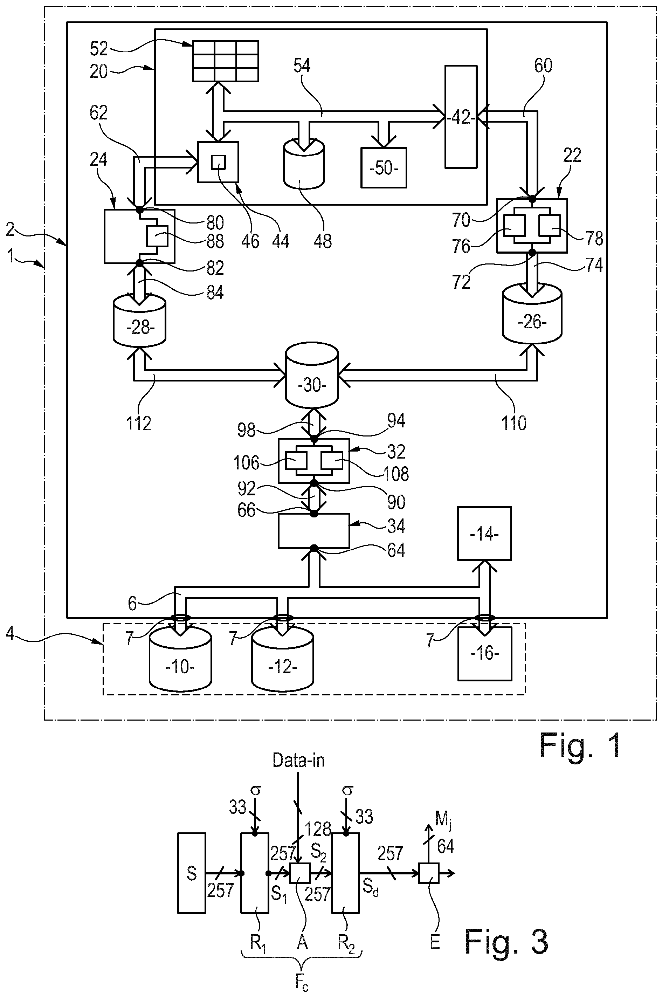

La figure 1 représente un calculateur électronique 1 comportant un système 2 sur puce et un ensemble 4 de composants externes. Par exemple, le calculateur 1 est le calculateur d'un ordinateur, d'un smartphone, d'une tablette électronique ou similaire.

Le système 2 comporte un bus principal 6 d'interconnexion qui permet de raccorder le système 2 aux différents composants externes de l'ensemble 4. À cet effet, le bus 6 est raccordé à des ports 7 d'entrée/sortie du système 2. Le bus 6 comporte typiquement :

- un bus de données sur lequel sont transmis des mots, et
- un bus d'adresse sur lequel sont transmises les adresses auxquelles ces mots doivent être lus ou écrits.

Par la suite, pour simplifier les figures, seuls les bus de données sont représentés.

À titre d'illustration, dans cet exemple de mode de réalisation, l'ensemble 4 comporte les composants suivants qui sont chacun raccordés au bus 6 :

- un support 10 de stockage d'informations,
- une mémoire 12 de masse telle qu'une mémoire Flash, et
- une interface 16 de périphérique qui permet d'échanger des données entre le système 2 et un ou plusieurs périphériques.

Le bus 6 peut aussi être raccordé à des composants internes du système 2. A titre d'illustration, ici, le bus 6 est raccordé à un contrôleur 14 d'accès direct à la mémoire plus connu sous l'acronyme DMA (*«Direct Memory Access Controller»*).

Dans cet exemple de réalisation, le support 10 est une mémoire principale volatile dans laquelle sont enregistrées des données à traiter par le système 2 ainsi que les instructions d'un ou plusieurs processus exécutés par le système 2 pour traiter ces données.

Le système 2 est une puce semi-conductrice sur laquelle est implémenté l'ensemble des composants nécessaires pour exécuter les instructions enregistrées sur le support 10 afin de traiter les données également enregistrées sur ce même support. Ici, seuls les composants du système 2 nécessaires pour comprendre l'invention sont représentés et décrits.

Le système 2 comporte :

- une unité centrale 20 de traitement,
- deux premiers circuits matériels 22 et 24 de protection contre les attaques par canaux auxiliaires,
- deux mémoires caches internes 26 et 28,
- une mémoire cache interne 30,
- un second circuit matériel 32 de protection contre les attaques par canaux auxiliaires, et
- un circuit matériel cryptographique 34 pour chiffrer et déchiffrer.

Ces différents composants du système 2 sont raccordés les uns aux autres par l'intermédiaire de bus interne de données et de bus d'adresses.

L'unité centrale 20 comporte typiquement :

- une interface 42 d'entrée/sortie de données,
- un chargeur 44 d'instructions comportant un compteur ordinal 46,
- une file 48 d'instructions à exécuter,
- une unité arithmétique et logique 50 apte à exécuter les unes après les autres les instructions contenues dans la file 28,
- un ensemble 52 de registres, et
- des bus 54 qui relient entre eux les différents éléments ci-dessus de l'unité centrale 20.

L'interface 42 raccorde l'unité centrale 20 au circuit 22 de protection par l'intermédiaire d'un bus interne 60 de données pour lire et écrire des données dans la mémoire cache 26. Typiquement, l'interface 42 transfère des données entre l'ensemble 52 de registres et la mémoire cache 26.

Le bus 60 permet de transporter entre l'unité centrale 20 et le circuit 22 de protection, en un seul cycle d'horloge, un mot $W_j$ dont la taille $T_w$ est supérieure à la taille $T_D$ d'une donnée $D_j$. Dans ce texte, l'indice j identifie la donnée $D_j$. Typiquement, la taille $T_D$ est supérieure à 16 bits ou 32 bits ou 64 bits. Dans ce premier exemple de réalisation, la taille $T_D$ est égale à 64 bits.

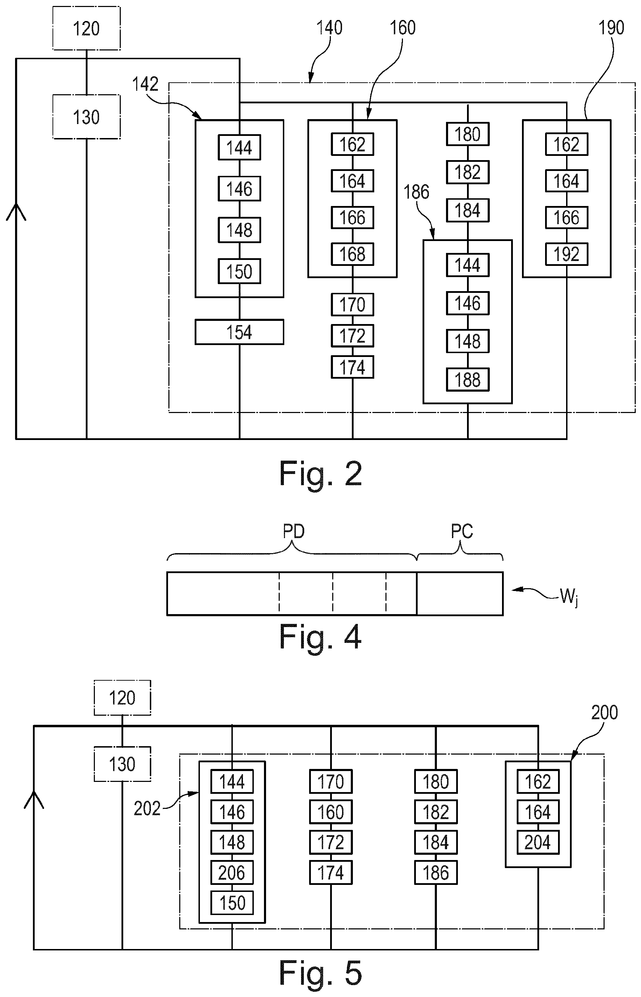

Comme illustré sur la figure 4, dans ce mode de réalisation, le mot $W_j$ est divisé en deux plages successives de bits :

- une plage PD de 64 bits qui contient les bits codant la

donnée $D_j$, et
- une plage PC destinée à contenir des métadonnées $MC_j$ en clair.

Dans cet exemple de réalisation, les métadonnées $MC_j$ comportent notamment un vecteur d'initialisation $iv_j$ qui sera décrit plus loin. La taille $T_{iv}$ de ce vecteur d'initialisation $iv_j$ est typiquement supérieure à 4 bits ou 8 bits ou 16 bits. Dans cet exemple, la taille $T_{iv}$ est égale à 8 bits. Ainsi, la taille $T_w$ du mot $W_j$ est ici supérieure ou égale à 72 bits.

Le chargeur 44 est raccordé au circuit 24 de protection par l'intermédiaire d'un bus interne 62 pour charger les instructions à exécuter à partir de la mémoire cache 28. Plus précisément, le chargeur 44 charge l'instruction sur laquelle pointe le compteur ordinal 46. À cet effet, le compteur ordinal 46 comporte l'adresse de la prochaine instruction à exécuter. Le chargeur 44 enregistre chaque instruction chargée, les unes après les autres, dans la file 48.

Le bus 62 est identique au bus 60. Ainsi, la taille des mots transportés sur ce bus 62 est égale à $T_w$.

L'unité arithmétique et logique 50 exécute les unes après les autres des instructions contenues dans la file 48. Le jeu d'instructions exécutables par l'unité arithmétique et logique 50 comporte notamment :

- des instructions de chargement, par exemple dans l'un des registres de l'ensemble 52, d'une donnée qui se trouve à une adresse spécifiée sur le support 10,
- des instructions d'écriture d'une donnée, par exemple actuellement présente dans l'un des registres de l'ensemble 52, à une adresse spécifiée sur le support 10, et
- des instructions de traitement de données qui traitent les données, par exemple contenues dans l'ensemble 52 de registres, et qui enregistrent le résultat de ce traitement, par exemple, également, dans l'ensemble 52 de registres.

Les mémoires caches 26, 28 et 30 forment une architecture de mémoires caches à deux niveaux qui permet d'accélérer le transfert des données et des instructions entre le support 10 et l'unité centrale 20. Les mémoires caches sont classées par ordre de rapidité de lecture, la mémoire cache de premier niveau étant la plus rapide. De plus, généralement, la taille des mémoires caches augmente avec le niveau de la mémoire cache. Ainsi, la taille de la mémoire cache de premier niveau est inférieure à la taille de la mémoire cache de second niveau. Les premier et second niveaux de mémoires caches sont habituellement appelés *«L1»* et *«L2»*. Ici, les mémoires caches 26 et 28 sont des mémoires caches de premier niveau et la mémoire cache 30 est une mémoire cache de second niveau. Dans ce mode de réalisation, la mémoire cache 26 est uniquement utilisée pour y enregistrer des données tandis que la mémoire cache 28 est uniquement utilisée pour y enregistrer des instructions.

Les données et instructions enregistrées sur le support 10 sont enregistrées sous forme chiffrée. Pour cela, le circuit cryptographique 34 chiffre chaque donnée à écrire sur le support 10 avant qu'elle soit déposée sur le bus 6. Réciproquement, le circuit cryptographique 34 déchiffre chaque donnée ou instruction chargée à partir du support 10 pour obtenir une donnée déchiffrée ou une instruction déchiffrée. Ainsi, après le module cryptographique 34, les données et instructions qui transitent sur les bus internes du système 2 ne sont pas chiffrées.

Pour cela, le circuit cryptographique 34 comporte un port 64 d'entrée/sortie raccordé au port 7 pour recevoir les données ou des instructions chiffrées et, en alternance, déposés sur le bus 6 des données chiffrées. Il comporte également un port 66 d'entrée/sortie sur lequel il délivre la donnée ou l'instruction déchiffrée et, en alternance, reçoit la donnée en clair à déposer sur le bus 6.

Pour chiffrer et déchiffrer les données et instructions enregistrées sur le support 10, le circuit cryptographique 34 exécute, par exemple, un algorithme de chiffrement/déchiffrement symétrique prédéterminé. Il utilise pour cela une clé secrète $k_{10}$. L'algorithme de chiffrement utilisé peut être un algorithme de chiffrement par bloc ou un algorithme de chiffrement par flux plus connu sous le terme anglais de «*Stream Cipher*». Généralement, le circuit cryptographique 34 construit une ligne de données $LD_j$ qui comporte le cryptogramme $D_j^*$ de la donnée $D_j$. Cette ligne de données $LD_j$ peut également comporter d'autres informations telles que :

- un code d'authentification $MAC_j$ qui permet de vérifier l'intégrité et l'authenticité du cryptogramme $D_j^*$,
- un code détecteur d'erreur $ECC_{Lj}$ qui permet de vérifier l'intégrité du code $MAC_j$ et du cryptogramme $D_j^*$ et, éventuellement, de corriger l'erreur détectée.

De façon similaire, chaque instruction est généralement enregistrée dans une ligne d'instructions $LI_j$. La structure d'une telle ligne d'instructions est par exemple identique à la structure de la ligne de données $LD_j$ sauf que le cryptogramme contenu dans cette ligne d'instructions est le cryptogramme de l'instruction et non pas le cryptogramme d'une donnée.

Les circuits 22, 24 et 32 de protection sont réalisés pour éviter qu'une attaque par canaux auxiliaires puisse révéler les valeurs des données et instructions qui transitent sur les bus internes du système 2 et notamment sur le bus interne qui raccorde entre elles les mémoires caches internes. À cet effet, les circuits 22, 24 et 32 masquent les données et les instructions qui transitent entre la mémoire 30 et les mémoires caches 26 et 28. Plus précisément, ici :

- le circuit 22 est configuré pour masquer chaque donnée écrite dans la mémoire cache 26 par l'unité centrale 20 et pour démasquer chaque donnée chargée par l'unité centrale 20 à partir de la mémoire cache 26,
- le circuit 24 est configuré pour démasquer chaque instruction chargée par l'unité centrale 20 à partir de la mémoire cache 28, et
- le circuit 32 est configuré pour masquer chaque donnée ou instruction déplacée du support 10 vers la mémoire cache 30 et pour démasquer chaque donnée déplacée de la mémoire cache 30 vers le support 10.

À cet effet, le circuit 22 de protection est interposé entre l'unité centrale 20 et la mémoire cache 26 et, plus précisément, entre l'interface 42 et la mémoire cache 26. Ainsi, toutes données déplacées entre l'unité centrale 20 et la mémoire cache 26 passent par l'intermédiaire du circuit 22. Ici, le circuit 22 comporte :

- un port 70 d'entrée/sortie raccordé à l'extrémité du bus 60 opposée à l'interface 42, et
- un port 72 d'entrée/sortie raccordé à un bus interne 74 dont l'autre extrémité est raccordée à la mémoire cache 26.

La taille du bus 74 est identique à la taille du bus 60.

Le circuit 22 comporte notamment un module 76 de masquage et un module 78 de démasquage. Le module 76 reçoit, par l'intermédiaire du port 70, la donnée $D_j$ à masquer puis masque cette donnée pour obtenir une donnée masquée $D_j^M$ et dépose la donnée masquée $D_j^M$ sur le bus 74 pour qu'elle soit enregistrée dans la mémoire cache 26. À cet effet, le module 76 est apte à construire un nouveau masque $M_j$ pour chaque nouvelle donnée $D_j$ à masquer.

Le module 78 reçoit, par l'intermédiaire du port 72, une donnée masquée $D_j^M$ déposée sur le bus 74 par la mémoire cache 26. En réponse, le module 78 démasque cette donnée masquée $D_j^M$ et dépose la donnée démasquée $D_j$ sur le bus 60.

Bien que représentés dans la figure 1 sous la forme de deux blocs distincts, les modules 76 et 78 comportent des circuits communs et notamment un circuit commun pour construire le masque $M_j$ à partir du vecteur d'initialisation $iv_j$.

Le circuit 24 de protection est interposé entre l'unité centrale 20 et la mémoire cache 28 et, plus précisément, entre le chargeur 42 et la mémoire cache 28. Ainsi, toute instruction déplacée de la mémoire cache 28 vers la file 48 passe d'abord par l'intermédiaire du circuit 24. Ici, le circuit 24 comporte :

- un port 80 d'entrée/sortie raccordé à l'extrémité du bus 62 opposée au chargeur 44, et
- un port 82 d'entrée/sortie raccordé à un bus interne 84 dont l'autre extrémité est raccordée à la mémoire cache 28.

La taille du bus 84 est identique à la taille du bus 62.

Le circuit 24 comporte un module 88 de démasquage identique au module 78 de démasquage.

Le circuit 32 de protection est interposé entre le port 66 du circuit cryptographique 34 et la mémoire cache 30. À cet effet, il comporte :

- un port 90 d'entrée/sortie raccordé à l'extrémité d'un bus interne 92 dont l'autre extrémité est raccordée au port 66 du circuit cryptographique 34, et
- un port 94 d'entrée/sortie raccordé à l'extrémité d'un bus interne 98 dont l'autre extrémité est raccordée à la mémoire cache 30.

La taille des bus 92 et 98 est égale à la taille $T_w$.

Le circuit 32 comporte un module 106 de masquage et un module 108 de démasquage identiques, respectivement, au module 76 de masquage et au module 78 de démasquage.

Sur la figure 1, les bus internes qui relient la mémoire cache 30 aux mémoires caches 26 et 28 portent, respectivement, les références 110 et 112.

Le fonctionnement du calculateur 1 va maintenant être décrit en référence à la figure 2. Par la suite, seules les étapes qui permettent de protéger le système 2 contre les attaques par canaux auxiliaires sont décrites en détail. Pour le reste, le calculateur 1 fonctionne de façon habituelle.

En particulier, les mots $W_j$ sont déplacés entre le support 10 et les mémoires caches 26, 28 et 30 de manière à maximiser la probabilité que le prochain mot $W_j$ à charger par l'unité centrale 20 se trouve déjà dans la mémoire cache 26 ou 28 avant que le chargement de ce mot $W_j$ soit déclenché par l'exécution par l'unité arithmétique et logique 50 d'une instruction de chargement. Cela permet d'accélérer le chargement de cette donnée ou de cette instruction. Si le mot $W_j$ ne peut pas être trouvé dans la mémoire cache 26 ou 28, la probabilité qu'il se trouve dans la mémoire cache 30 est également maximisée toujours afin d'accélérer le chargement de ce mot $W_j$ vers l'unité centrale 20. Autrement dit, la gestion des mémoires caches est organisé pour minimiser l'occurrence de défaut de cache. Un défaut de cache est plus connu sous le terme anglais de «*Cache Miss*». De nombreux mécanismes de gestion des mémoires caches 26, 28 et 30 sont connus. De plus, le procédé de protection décrit ci-dessous fonctionne quel que soit le mécanisme de gestion des mémoires caches implémenté. Ainsi, ce mécanisme de gestion des mémoires caches 26, 28 et 30 n'est pas décrit en détail.

De façon similaire, l'enregistrement de données et d'instructions chiffrées sur le support 10 fonctionne de façon connue et n'est donc pas décrit en détail.

Enfin, également de façon connue en soi, lors de l'exécution d'un processus, un identifiant de ce processus est généré. Cet identifiant de processus permet d'identifier de façon unique le processus à exécuter parmi les différents processus susceptibles d'être exécuté par le calculateur 1. Un tel identifiant de processus est connu sous l'acronyme ASID (*«Address Space Identifier»*). Par la suite, cet identifiant de processus est donc appelé "identifiant ASID". L'identifiant ASID est habituellement utilisé pour empêcher qu'un processus accède à des pages de données réservées pour un autre processus. Cet identifiant ASID se trouve dans une plage de bits de l'adresse de la donnée $D_j$ à déplacer entre les mémoires du calculateur 1.

Initialement, lors d'une phase 120, une clé secrète $k_p$ est enregistrée dans les circuits 22, 24 et 32 de protection. Par exemple, la clé $k_p$ est chargée à chaque fois que l'exécution d'un nouveau processus est déclenchée. Ainsi, ici, la clé $k_p$ varie en fonction du processus à exécuter. Dans cet exemple, la taille de la clé $k_p$ est égale à 128 bits.

Ensuite, lors d'une phase 130, l'unité centrale 20 exécute un processus et, pour cela, des instructions et des données sont déplacées entre le support 10 et les mémoires caches 26, 28 et 30 et l'unité centrale 20. Typiquement, le chargeur 44 charge les instructions du processus à exécuter les unes après les autres dans la file 48, puis l'unité arithmétique et logique 50 exécute les instructions chargées dans cette file 48. Pour charger une instruction, le chargeur 44 dépose sur un bus d'adresse, l'adresse contenue dans le compteur ordinal 46. En réponse, si l'instruction à charger se trouve déjà dans la mémoire cache 28, celle-ci est immédiatement déposée sur le bus 82. À l'inverse, si l'instruction à charger ne se trouve pas dans la mémoire cache 28, celle-ci est déplacée jusqu'à la mémoire cache 28 avant d'être déposée sur le bus 84. Dans ce dernier cas :

- si l'instruction à charger est dans la mémoire cache 30, elle est déplacée de la mémoire cache 30 vers la mémoire cache 28 par l'intermédiaire du bus 112, ou
- si l'instruction à charger ne se trouve pas non plus dans la mémoire cache 30, elle est successivement déplacée du support 10 vers la mémoire cache 30 par l'intermédiaire du bus 6, du circuit cryptographique 34 et des bus internes 92 et 98, puis de la mémoire cache 30 vers la mémoire cache 28 par l'intermédiaire du bus 112.

Lors de son passage à travers le circuit cryptographique 34, le cryptogramme $I_m^*$ de l'instruction $I_m$ à charger est déchiffré puis l'instruction $I_m$ en clair est transmise et déposée sur le bus 92. L'indice m est un identifiant de l'instruction $I_m$. Ainsi, avant le circuit cryptographique 34, les instructions sont chiffrées, tandis qu'après le circuit cryptographique 34, les instructions sont en clair.

Dans cet exemple, les instructions ne sont jamais déplacées de l'unité centrale 20 vers les mémoires caches 28, 30 et vers le support 10.

Si l'instruction exécutée par l'unité centrale 20 est une instruction de chargement d'une donnée $D_j$,

l'adresse $@_j$ de la donnée $D_j$ à charger est déposée sur un bus d'adresse. En réponse, si la donnée à charger se trouve déjà dans la mémoire cache 26, celle-ci est immédiatement déposée sur le bus 74. À l'inverse, si la donnée $D_j$ à charger ne se trouve pas déjà dans la mémoire cache 26, celle-ci est déplacée jusqu'à cette mémoire cache 26 avant d'être déposée sur le bus 74. Dans ce cas, comme précédemment décrit dans le cas d'une instruction $I_m$, il existe deux cas de figure selon que la donnée à charger se trouve déjà dans la mémoire cache 30 ou ne s'y trouve pas déjà.

Si l'instruction exécutée par l'unité centrale 20 est une instruction d'écriture d'une donnée $D_j$ sur le support 10, l'adresse $@_j$ où doit être écrite cette donnée est déposée sur le bus d'adresse et la donnée $D_j$ est déposée sur le bus 60. Typiquement, la donnée $D_j$ est alors d'abord enregistrée dans la mémoire cache 26. Ensuite, c'est le mécanisme de gestion des mémoires caches qui sélectionne, en fonction de règles prédéfinies, les données de la mémoire cache 26 à déplacer vers la mémoire cache 30 et les données de la mémoire cache 30 à déplacer vers le support 10. Lorsque les données sont déplacées de la mémoire cache 26 vers la mémoire cache 30, elles transitent par l'intermédiaire du bus interne 110. Lorsque les données sont déplacées de la mémoire cache 30 vers le support 10, elles transitent par l'intermédiaire du bus 6.

Lorsqu'une donnée $D_j$ est déplacée de la mémoire cache 30 vers le support 10, elle traverse le circuit cryptographique 34. Lors de cette traversée, la donnée $D_j$ est chiffrée et son cryptogramme $D_j^*$ est incorporé dans une ligne $LD_j$. Ensuite, la ligne $LD_j$ est enregistrée dans le support 10 à l'adresse $@_j$.

En parallèle, lors d'une phase 140, les circuits 22, 24 et 32 protègent les données et les instructions déplacées sur les bus internes du système 2 contre les attaques par canaux auxiliaires.

Pour cela, lors d'une étape 142, le module 76 masque chaque donnée $D_j$ déplacée de l'unité centrale 20 vers la mémoire cache 26. À cet effet, il construit un nouveau masque $M_j$ dont la taille $T_M$, en nombre de bits, est égale à la taille $T_D$ de la donnée $D_j$.

Plus précisément, lors d'une opération 144, le module 76 génère un nouveau vecteur d'initialisation $iv_j$. Par exemple ici, le vecteur d'initialisation $iv_j$ est tiré de façon aléatoire. La taille $T_{iv}$ de ce vecteur d'initialisation $iv_j$ est deux fois inférieure à la taille $T_D$ de la donnée $D_j$ à masquer et de préférence huit ou seize fois inférieure à la taille $T_D$. Ici, comme précédemment indiqué, dans ce mode de réalisation, la taille $T_{iv}$ est égale à 8 bits.

Ensuite, lors d'une opération 146, le module 76 produit le nouveau masque $M_j$ à partir du vecteur $iv_j$ généré. Pour que la distribution statistique des valeurs du masque $M_j$ produit se rapproche le plus possible de la distribution statistique d'une loi uniforme, le masque $M_j$ est ici, en plus, produit à partir d'informations qui varient en fonction du processus exécuté, en fonction de la valeur de la donnée $D_j$ et/ou en fonction de l'adresse

$@_j$ de la donnée $D_j$. Ici, le masque $M_j$ est également produit à partir :

- de la clé $k_p$,
- de l'adresse $@_j$ de la donnée $D_j$, et
- de l'identifiant ASID.

L'adresse $@_j$ et l'identifiant ASID sont obtenus à partir de l'unité de management de la mémoire plus connue sous l'acronyme MMU (*«Management Memory Unit»*). La clé $k_p$ est préenregistrée dans le circuit 22 de protection.

Ici, pour produire le nouveau masque $M_j$, un bloc de 257 bits, appelé état "S", est d'abord construit à partir des valeurs du vecteur $iv_j$, de la clé $k_p$, de l'adresse $@_j$ et de l'identifiant ASID. Par exemple, les bits de la clé $k_p$, du vecteur $iv_j$, de l'adresse $@_j$ et de l'identifiant ASID sont concaténés pour obtenir un premier bloc de bits. Ce premier bloc de bits est complété par une constante préenregistrée dans chacun des circuits de protection pour obtenir un second bloc de 257 bits. Enfin, les bits de ce second bloc sont permutés en mettant en œuvre une permutation prédéfinie pour obtenir l'état S. Cette permutation est câblée et s'exécute donc en un seul cycle d'horloge. Par exemple, cette permutation câblée est identique à l'une des permutations de l'algorithme de chiffrement/déchiffrement DES (*«Data Encryption Standard»*).

Ensuite, une fonction cryptographique $F_c$ est appliquée à l'état S pour maximiser l'entropie du masque $M_j$ produit. L'application de la fonction $F_c$ à l'état S produit un état $S_D$ de plus forte entropie que l'état S. L'état $S_D$ est aussi un bloc de 257 bits.

À cet effet, la fonction $F_c$ est conçue de manière à diffuser une modification d'un bit de l'état S. Autrement dit, le fait de modifier la valeur d'un seul bit de l'état S entraîne une modification de plusieurs bits de l'état $S_D$. Pour cela, ici, la fonction $F_c$ comporte la composition d'une fonction de permutation p() et d'une fonction s() de substitution. La fonction p() permute des bits de l'état S et, de préférence, permute au moins 50 % ou 60 % des bits de l'état S. La fonction s() remplace au moins 50 % ou 70 % des bits de l'état S par d'autres bits. Par exemple, pour cela, la fonction s() comporte une table préenregistrée de correspondance (*«lookup table»* en anglais) qui à chaque série initiale de m bits associe une série différente de m bits. La fonction $F_c$ utilisée dans ce mode de réalisation est représentée sur la figure 3. Sur cette figure, le symbole *«/»* à côté d'un chiffre désigne la taille du bus de données barré par le symbole *«/»*. Ainsi, le symbole *«/»* à côté du chiffre « 128 » signifie que la taille du bus barré par ce symbole est égale à 128 bits.

Sur la figure 3, l'état S est représenté par un rectangle comportant la lettre S. La fonction $F_c$ comporte une première ronde $R_1$ qui reçoit en entrée l'état S et qui génère en sortie un état intermédiaire $S_1$. L'état $S_1$ est un bloc de 257 bits. La ronde $R_1$ est un circuit matériel qui réalise, entre autres, des permutations et des substitutions des bits de l'état S pour obtenir l'état S$_1$. Par exemple, ici, la ronde R$_1$ est identique à une ronde de l'algorithme de chiffrement "Subterranean 2.0" décrit dans l'article : J. Daemnen et AL : «The Subterranean 2.0 Cipher suite», version du 29 mars 2019. En particulier, la figure 3 de cet article décrit un circuit matériel pour implémenter cette ronde R$_1$. La ronde R$_1$ comporte une entrée qui reçoit l'état S et une entrée qui reçoit un bloc σ de 33 bits. Le bloc σ est, par exemple, un bloc de 33 bits prédéterminé et constant.

Ensuite, la fonction F$_c$ comporte un circuit "A" d'absorption qui substitue à 128 bits prédéterminés de l'état intermédiaire S$_1$, les 128 bits d'un bloc data_in pour obtenir un nouvel état intermédiaire S$_2$. Dans cet exemple de réalisation, le bloc data_in est construit, en appliquant un algorithme prédéterminé, à partir du vecteur iv$_j$ et de l'adresse @$_j$ avant d'exécuter la fonction F$_c$. Par exemple, les positions des 128 bits de l'état S$_1$ à remplacer par les 128 bits du bloc data_in sont définies par la relation suivante : POS$_i$ = 12$^{4k+p}$ mod(257), où :

- POS$_i$ est la position dans le bloc S$_1$ du bit à remplacer,
- i est un entier qui varie de 0 à 127,
- si l'indice i appartient à l'intervalle [0; 31], p = 0 et k = i,
- si l'indice i appartient à l'intervalle [32; 63], p=1 et k= i-32,
- si l'indice i appartient à l'intervalle [64; 95], p=2 et k = i-64, et
- si l'indice i appartient à l'intervalle [96; 127], p = 3 et k = i-96,
- la fonction mod(257) est la fonction modulo, c'est-à-dire la fonction qui renvoie le reste de la division euclidienne de 12$^{4k+p}$ par 257.

Les bits de l'état intermédiaire S$_2$ sont ensuite fournis en entrée d'une nouvelle ronde R$_2$ qui délivre en sortie l'état S$_D$. Ici, la ronde R$_2$ est identique à la ronde R$_1$.

Après avoir appliqué la fonction F$_c$ à l'état S pour obtenir l'état S$_D$, le masque M$_j$ est obtenu par extraction de 128 bits, situés à des positions prédéterminées, dans l'état S$_D$. Le circuit qui réalise cette extraction est désigné par la lettre E dans la figure 3. Le circuit E construit la valeur du bit Z$_i$ situé à la position i dans le masque M$_j$ à l'aide de la relation suivante : Z$_i$ = s$_{12(4k+p)}$ + s$_{-12(4k+p)}$, où :

- l'indice i varie de 0 à 63,
- s$_{12(4k+p)}$ est la valeur du bit situé à la position 12$^{4k+p}$ mod(257) dans l'état S$_D$,
- s$_{-12(4k+p)}$ est la valeur du bit situé à la position -12$^{4k+p}$ mod(257) dans l'état S$_D$,
- si l'indice i appartient à l'intervalle [0; 31], p = 0 et k = i,
- si l'indice i appartient à l'intervalle [32; 63], p = 1 et k = i-32, et
- le symbole "+" désigne l'opération logique "OU".

Une fois le nouveau masque M$_j$ construit, lors d'une opération 148, le module 76 masque la donnée D$_j$ avec le masque M$_j$ pour obtenir la donnée masquée D$_j^M$. Cette opération est définie par la relation suivante : D$_j^M$ = D$_j$ XOR M$_j$, où le symbole XOR désigne l'opération logique *«ou exclusif»*.

Lors d'une opération 150, le module 76 enregistre la donnée masquée D$_j^M$ dans la mémoire cache 26. Lors de cette opération, le vecteur iv$_j$ utilisé pour construire le masque M$_j$ est aussi enregistré dans la mémoire cache 26 en association avec la donnée masquée D$_j^M$. Pour cela, le module 76 génère le mot W$_j$ qui contient la donnée masquée D$_j^M$ dans la plage PD et le vecteur iv$_j$ dans la plage PC. Ainsi, le mot W$_j$ enregistré dans la mémoire cache 26 comporte, en plus de la donnée masquée D$_j^m$, le vecteur iv$_j$. La donnée D$_j$ en clair n'est pas enregistrée dans la mémoire 26. Le masque M$_j$ n'est pas non plus enregistré dans la mémoire cache 26.

Si par la suite, le mot W$_j$ est déplacé par le mécanisme de gestion des mémoires caches, de la mémoire cache 26 vers la mémoire cache 30. A cet occasion, lors d'une étape 154, le mot W$_j$ enregistré dans la mémoire cache 26 est déposé sur le bus 110. Puisque ce mot W$_j$ contient uniquement la donnée masquée D$_j^M$, seule cette donnée masquée D$_j^M$ transite sur le bus 110. De plus, la donnée masquée D$_j^M$ est déplacée en même temps que le vecteur iv$_j$. Dès lors, le mot W$_j$ enregistré dans la mémoire cache 30 comporte seulement la donnée masquée D$_j^M$ et le vecteur iv$_j$ et non pas la donnée D$_j$ en clair et le masque M$_j$ complet.

Si par la suite, le mot W$_j$ est déplacé par le mécanisme de gestion des mémoires caches, de la mémoire cache 30 vers le support 10, alors le mot W$_j$ traverse successivement le module 108 de démasquage et le circuit cryptographique 34.

Lors d'une étape 160, le module 108 démasque la donnée masquée D$_j^m$ avant de la transmettre au circuit cryptographique 34.

Pour cela, lors d'une opération 162, le module 108 extrait le vecteur iv$_j$ de la plage PC du mot W$_j$.

Ensuite, lors d'une opération 164, le module 108 reconstruit le masque M$_j$ à partir :

- de la clé k$_p$,
- du vecteur iv$_j$ extrait,
- de l'adresse @$_j$ de la donnée D$_j$, et
- de l'identifiant ASID.

L'opération 164 est identique l'opération 146 sauf qu'elle est exécutée par le module 108. En particulier, la même fonction F$_c$ est utilisée lors de l'opération 164.

Une fois le masque M$_j$ reconstruit, lors d'une opération 166, le module 108 démasque la donnée masquée D$_j^M$. Cette opération est définie par la relation suivante :

$$D_j = D_j^M \text{ XOR } M_j.$$

Lors d'une opération 168, le module 108 génère un nouveau mot $W_j$ et le dépose sur le bus 92 pour le transmettre au circuit cryptographique 34. Ce nouveau mot $W_j$ comporte la donnée $D_j$ démasquée dans la plage PD. À ce stade, par exemple, ce nouveau mot $W_j$ ne comporte pas le vecteur $iv_j$.

Lors d'une étape 170, le circuit cryptographique 34 chiffre la donnée $D_j$ contenue dans le mot $W_j$ reçu. Par exemple, ici, il construit une ligne de donnée $LD_j$ contenant le cryptogramme $D_j^*$ de la donnée $D_j$.

Lors d'une étape 172, une fois la ligne $LD_j$ construite, le circuit cryptographique 34 la déplace vers le support 10 par l'intermédiaire du bus 6.

Lors d'une étape 174, la ligne $LD_j$ est enregistrée sur le support 10.

En sens inverse, le mécanisme de gestion des mémoires caches déclenche le déplacement d'une donnée $D_j$ du support 10 vers la mémoire cache 30. Dans ce cas, lors d'une étape 180, la ligne $LD_j$ est transférée, par l'intermédiaire du bus 6, du support 10 vers le circuit cryptographique 34.

Lors d'une étape 182, le circuit cryptographique 34 déchiffre le cryptogramme $D_j^*$ contenu dans la ligne $LD_j$ pour obtenir la donnée $D_j$ en clair.

Ensuite, lors d'une étape 184, la donnée $D_j$ en clair est déplacée du circuit cryptographique 34 vers le circuit 32 de protection.

Lors d'une étape 186, le module 106 de masquage masque la donnée $D_j$ à l'aide d'un nouveau masque $M_j$ pour obtenir la nouvelle donnée masquée $D_j^M$. Cette étape 186 est identique à l'étape 142 sauf que l'opération 150 est remplacée par une opération 188 d'enregistrement du mot $W_j$ contenant la donnée masquée $D_j^M$ dans la mémoire cache 30 et non pas dans la mémoire cache 26.

Puisque le mot $W_j$ contient seulement la donnée masquée $D_j^M$, lorsque ce mot $W_j$ est déplacé, par l'intermédiaire du bus 110 de la mémoire cache 30 vers la mémoire cache 26, seule la donnée masquée $D_j^M$ transite sur ce bus 110. De plus, le vecteur $iv_j$ est aussi déplacé en même temps de la mémoire cache 30 vers la mémoire cache 26. Dès lors, le mot $W_j$ enregistré dans la mémoire cache 26 contient à la fois la donnée masquée $D_j^M$ et le vecteur $iv_j$ qui permet de reconstruire le masque $M_j$.

En réponse à l'exécution par l'unité arithmétique et logique 50 d'une instruction de lecture de la donnée $D_j$, lors d'une étape 190, le module 78 démasque la donnée masquée $D_j^M$ contenue dans le mot $W_j$ enregistré dans la mémoire cache 26. Pour cela, le module 78 utilise le vecteur $iv_j$ contenu dans le même mot $W_j$ que celui contenant la donnée masquée $D_j^M$. Cette étape 190 est identique à l'étape 160 sauf que l'opération 168 est remplacée par une opération 192 lors de laquelle le mot $W_j$ contenant la donnée $D_j$ en clair est déposé sur le bus 60 pour le transmettre à l'unité centrale 20.

Le déplacement d'une instruction $I_m$ du support 10 jusqu'à l'unité centrale 20 se déroule comme décrit pour une donnée $D_j$. Il est possible de distinguer un mot $W_m$ contenant l'instruction $I_m$ d'un mot $W_j$ contenant une donnée à partir de l'adresse $@_m$ de l'instruction $I_m$. Par exemple, l'adresse $@_m$ contient un bit qui indique que le mot $W_m$ contient une instruction. Ce bit est généré par l'unité de gestion de la mémoire.

La figure 5 représente un mode de réalisation d'un procédé de protection des données dans lequel les données n'apparaissent pas en clair sur les bus 60 et 92. Ce procédé est identique au procédé de la figure 2 à l'exception des différences suivantes.

Lors du déplacement d'une donnée $D_j$ de la mémoire cache 30 vers le support 10, l'ordre de l'étape 160 de démasquage et de l'étape 170 de chiffrement est inversé. Ainsi, la donnée $D_j$ n'apparaît pas en clair sur le bus 92. Pour cela, les emplacements des circuits 32 et 34 sont permutés par rapport à ce qui est représenté sur la figure 1. Dans ce cas, la donnée masquée $D_j^M$ est d'abord chiffrée par le circuit cryptographique 34 pour obtenir une donnée masquée et chiffrée $D_j^{M*}$. Le mot $W_j$ contenant la donnée masquée et chiffrée $D_j^{M*}$ et le vecteur $iv_j$ est alors déposé sur le bus 92 pour être transmis au circuit 32. Ensuite, le module 108 démasque la donnée masquée et chiffrée $D_j^{M*}$ pour obtenir le cryptogramme $D_j^*$. Pour cela, par exemple, l'algorithme de chiffrement/déchiffrement mis en œuvre par le circuit cryptographique 34 est un algorithme de chiffrement/déchiffrement de flux ("stream chiffer" en anglais). Un tel algorithme génère une suite chiffrante de bits à partir de la clé $k_{10}$ puis combine cette suite chiffrante avec la donnée à chiffrer pour obtenir le cryptogramme de la donnée. L'opération de combinaison entre la suite chiffrante et la donnée en clair est un « ou *exclusif*». C'est à cause de cela que l'exécution en premier de l'opération de chiffrement puis ensuite de l'opération de démasquage permet d'obtenir le même résultat qu'exécuter d'abord l'opération de démasquage puis l'opération de chiffrement.

De même, pour éviter que la donnée $D_j$ transite en clair sur le bus 60, l'étape 190 est remplacée par une étape 200 et l'étape 142 est remplacée par une étape 202.

L'étape 200 est identique à l'étape 190 sauf que l'opération 166 de démasquage est omise et l'opération 192 est remplacée par une opération 204. Lors de l'opération 204, la donnée masquée $D_j^M$ et le masque $M_j$ reconstruit sont tous les deux transmis à l'unité centrale 20.

Ensuite, lors de la phase 130, l'unité centrale 20 exécute un traitement sur la donnée masquée $D_j^M$ pour obtenir une donnée masquée traitée $D_j^{Mt}$. Ce traitement est le résultat de l'exécution d'une ou plusieurs instructions chargées par le chargeur 44 et qui modifie la donnée masquée $D_j^M$. En parallèle, lors de la phase 130, l'unité centrale 20 exécute le même traitement sur le masque $M_j$ reconstruit pour obtenir un masque traité $M_j^t$.

Lors de l'étape 202, l'unité centrale 20 déplace la donnée masquée et traitée $D_j^{Mt}$ et le masque traité $M_j^t$ dans la mémoire cache 26. Il est souligné que le masque

$M_j^t$ ne peut pas être reconstruit à partir d'un vecteur $iv_j$ comme cela était le cas pour le masque $M_j$ avant exécution du traitement. Dès lors, il n'est pas possible d'enregistrer dans la mémoire cache 26 directement la donnée masquée et traitée $D_j^{Mt}$ associée à un vecteur d'initialisation qui permet de reconstruire le masque $M_j^t$. Pour contourner cette difficulté, l'étape 202 est identique à l'étape 142 sauf qu'une opération supplémentaire 206 de démasquage est introduite entre les opérations 148 et 150.

Ici, lors de l'étape 202, le module 76 exécute d'abord les opérations 144, 146 et 148 pour masquer la donnée masquée et traitée $D_j^{Mt}$ avec un nouveau masque $M_j$ construit à l'aide d'un nouveau vecteur $iv_j$ généré. Une donnée doublement masquée $D_j^{Mt,M}$ est alors obtenue à l'issue de l'opération 148.

Lors de l'opération 206, le module 76 démasque la donnée doublement masquée $D_j^{Mt,M}$ avec le masque $M_j^t$ et obtient la donnée masquée $D_j^M$. Ensuite, l'opération 150 est exécutée pour enregistrer la donnée masquée $D_j^M$ et le vecteur $iv_j$ dans la mémoire cache 26.

Chapitre II: Variantes :

Variantes de la production du masque $M_j$ :

D'autres modes de réalisation sont possibles pour produire le nouveau masque $M_j$ à partir du vecteur $iv_j$. Par exemple, l'état S peut être établi différemment. En particulier, l'état S peut être établi en utilisant le vecteur $iv_j$, la clé $k_p$ et seulement une partie ou aucune des données choisies dans le groupe constitué :

- de l'identifiant ASID,
- de l'adresse $@_j$ de la donnée.

Dans un autre mode de réalisation, si chaque donnée $D_j$ est associée à un code détecteur ou correcteur d'erreur, la valeur de ce code peut être intégrée dans l'état S. De façon similaire, si la donnée $D_j$ est associée à un code d'authentification de message plus connu sous l'acronyme MAC (*«Message Authentification Code»*), au moins une partie de ce code MAC est intégrée dans l'état S.

Dans une autre variante, seule une partie de l'adresse $@_j$ ou seule une partie de l'identifiant ASID est prise en compte lors de la production du nouveau masque $M_j$.

En variante, la clé $k_p$ n'est pas spécifique au processus. Par exemple, cette clé $k_p$ est commune à plusieurs processus ou à l'ensemble des processus susceptibles d'être exécutés par le système 2.

Dans une variante très simplifiée, la clé $k_p$ est omise et n'est pas utilisée pour construire le nouveau masque $M_j$.

Dans une autre variante, ce qui a été précédemment décrit est mis en œuvre en même temps qu'un procédé de protection contre un usage erroné de pointeur. Par exemple, ce procédé de protection contre l'usage erroné de pointeur est celui décrit dans la demande US20210004456A1. Comme expliqué en détail dans la demande US20210004456A1, un identifiant de pointeur $IP_j$ est associé à une donnée $D_j$ lorsqu'elle est manipulée à l'aide d'un pointeur. Par exemple, pour cela, cet identifiant $IP_j$ est intégré dans la plage PC de chaque mot $W_j$ contenant une donnée $D_j$ manipulée par un pointeur. Dans ce cas, cet identifiant $IP_j$ peut être utilisé pour construire le nouveau masque $M_j$. Par exemple, cet identifiant $IP_j$ est intégré dans l'état S.

Dans une autre variante simplifiée, la permutation des bits pour obtenir l'état S peut être omise ou être différente de celle définie dans l'algorithme de chiffrement DES.

Dans la fonction $F_c$, la fonction de substitution s() peut être réalisée différemment. Par exemple, au lieu d'utiliser une table prédéfinie de correspondance, la série de m bits qui doit être substituée par une autre série de m bits est calculée et non pas préenregistrée.

Le bloc data_in peut être construit différemment. Par exemple, il peut être construit à partir d'un ou plusieurs des éléments suivants : l'identifiant ASID, la clé $k_p$, l'adresse $@_j$ de la donnée $D_j$, le vecteur $iv_j$ ou de toute autre métadonnée associée à la donnée $D_j$ tel qu'un identifiant de pointeur $IP_j$. À l'inverse, dans une variante très simplifiée, le bloc data_in est une constante.

Lorsque le bloc data_in est construit à partir du vecteur $iv_j$, il n'est pas nécessaire de construire l'état S à partir du vecteur $iv_j$. Réciproquement, lorsque l'état S est construit à partir du vecteur $iv_j$, alors il n'est pas nécessaire de construire le bloc data_in à partir de ce vecteur $iv_j$.

D'autres modes de réalisation de la fonction cryptographique $F_c$ sont possibles. Par exemple, en variantes, la fonction $F_c$ est une version modifiée de l'algorithme de chiffrement AES (*«Advance Encryption Standard»*). Dans cette version modifiée, le nombre de rondes (= *«round»* en anglais) exécutées est seulement égal à deux ou trois et donc très inférieur au nombre de rondes habituellement exécutées lors de la mise en œuvre d'un tel algorithme de chiffrement.

La fonction $F_c$ n'a pas besoin d'être une fonction inversible. Ainsi, en variantes, la fonction $F_c$ est une fonction de hachage. Dans ce cas, le nombre de bits de l'état $S_D$ peut être inférieur au nombre de bits de l'état S.

Variantes de la génération du vecteur $iv_j$ :

Le vecteur $iv_j$ peut être généré différemment. Par exemple, dans un mode de réalisation simplifié, un compteur est incrémenté d'un pas prédéterminé à chaque fois qu'il est nécessaire de générer un nouveau vecteur $iv_j$. La taille de ce compteur est égale à la taille $T_{iv}$. Lorsque la valeur maximale de ce compteur est atteinte, sa valeur revient automatiquement à zéro. La valeur du nouveau vecteur $iv_j$ est alors construite à partir de la valeur incrémentée de ce compteur. Par exemple, la valeur du nouveau vecteur $iv_j$ est égale à la valeur de ce compteur.

Le vecteur $iv_j$ peut aussi être généré en exécutant une permutation aléatoire ou une substitution aléatoire d'un ou plusieurs des bits d'un compteur. Le vecteur $iv_j$ peut aussi être généré en exécutant des décalages à droite ou à gauche des bits de ce compteur.

Le vecteur $iv_j$ peut aussi être pris égal à une sélection prédéterminée de bits d'une ou plusieurs des métadonnées $MC_j$ contenues dans la plage PC. Par exemple, dans un mode réalisation, la plage PC contient une étiquette d'intégrité $ET_j$ qui permet de vérifier l'intégrité de la donnée $D_j$. Une telle étiquette d'intégrité est par exemple un code correcteur d'erreur ou un code détecteur d'erreur. Dans une variante plus complexe, l'étiquette $ET_j$ peut aussi être un code d'authentification tel qu'un code MAC ("Message Authentification Code"). Le vecteur $iv_j$ est alors égal à une sélection prédéterminée des bits de l'étiquette $ET_j$. Dans ce cas, les bits du vecteur $iv_j$ sont utilisés pour remplir deux fonctions différentes, à savoir, pour produire le masque $M_j$ et pour vérifier l'intégrité de la donnée $D_j$. Ce mode de réalisation est avantageux en ce qu'il évite de stocker dans la plage PC le vecteur $iv_j$ et, séparément, l'étiquette $ET_j$.

Dans une autre variante, si la ligne de données $LD_j$ enregistrée dans le support 10 comporte des informations complémentaires en plus du cryptogramme de la donnée $D_j$, alors le vecteur $iv_j$ peut être généré en sélectionnant, d'une façon prédéterminée une partie des bits de ces informations complémentaires. Par exemple, si le procédé de la demande US20210004456A1 est mis en œuvre pour construire la ligne $LD_j$, cette ligne $LD_j$ comporte en plus un code d'authentification $MAC_j$. Le vecteur $iv_j$ peut alors être construit à partir d'une partie des bits de ce code $MAC_j$.

Le vecteur $iv_j$ peut également être généré à partir d'une partie des bits du cryptogramme $D_j^*$ de la donnée $D_j$ enregistrée sur le support 10.

Le module 76 peut aussi générer le vecteur $iv_j$ à partir du vecteur $iv_{j-1}$ utilisé pour démasquer la dernière donnée $D_{j-1}$ déplacée de la mémoire cache 26 vers l'unité centrale 20.

_Variantes de l'architecture du calculateur :_

En variantes, le circuit 32 de protection est omis. Dans ce cas, les données écrites par l'unité centrale 20 sur le support 10 restent masquées, y compris lorsqu'elles transitent sur le bus 6. Dans ce cas, le circuit 34 cryptographique peut également être omis puisque les données enregistrées sur le support 10 sont masquées et donc déjà protégées.

En variantes, les instructions ne sont pas masquées à l'intérieur du système 2. Dans ce cas, le circuit 24 de protection est omis. Ainsi, le mode de réalisation le plus simple, le système 2 comporte seulement le circuit 22 de protection et le circuit cryptographique 34 est aussi omis.

D'autres modes de réalisation du module cryptographique 34 sont possibles. En particulier, d'autres procédés de chiffrement/déchiffrement peuvent être mis en œuvre.

Le support 10 peut être toute mémoire de rang supérieur aux mémoires caches internes de premier niveau. Ainsi, en variantes, le support 10 est une mémoire de rang inférieur telle qu'une mémoire cache de niveau L3 ou L2. Dans ce cas, les circuits de protection et le circuit cryptographique sont placés en amont de cette mémoire de rang inférieur à celui de la mémoire principale.

Le nombre de niveaux de mémoires caches peut être plus petit que deux. Dans ce cas, la mémoire cache 30 est omise. Le nombre de niveaux de mémoires caches peut aussi être plus grand que deux. Par exemple, une mémoire cache de niveau L3 peut être ajoutée.

Les mémoires caches de niveau supérieur à la mémoire cache de niveau L1 peuvent être des mémoires caches externes implémentées en dehors du système 2.

La mémoire cache interne n'est pas nécessairement la mémoire cache de plus bas niveau, c'est-à-dire ici la mémoire cache de niveau L1. Par exemple, en variantes, la mémoire cache interne est la mémoire cache de niveau L2. Dans ce cas, les circuits de protection 22 et 24 sont interposés entre les mémoires caches 26 et 28 et la mémoire cache 30.

**Autres variantes :**

En variantes, chaque mot $W_j$ comporte en plus une plage PM de bits destinée à contenir des métadonnées $MP_j$ qui peuvent être masquées. Par exemple, ces métadonnées $MP_j$ comportent un code correcteur d'erreur qui permet de corriger une erreur dans la donnée $D_j$. Dans ce cas, la taille du mot $W_j$ est égale à la somme des tailles $T_D + T_{MC} + T_{MP}$, où les tailles $T_{MC}$ et $T_{MP}$ sont les tailles, respectivement, des métadonnées $MC_j$ et $MP_j$. Dans cette variante, les circuits de protection sont configurés pour générer un masque $M_j$ dont la taille permet à la fois de masquer/démasquer la donnée $D_j$ et les métadonnées $MP_j$. Ainsi, dans ce mode de réalisation, la taille $T_M$ du masque $M_j$ est égale à la somme des tailles $T_D$ et $T_{MP}$. Dès lors, dans un tel mode de réalisation, les métadonnées $MP_j$ sont également protégées contre les attaques par canaux auxiliaires de la même façon que les données $D_j$. Pour obtenir un masque $M_j$ de taille supérieure, il suffit par exemple d'augmenter le nombre de bits extraits de l'état $S_D$.

Plusieurs des variantes décrites ci-dessus peuvent être combinées dans un même mode de réalisation.

_Chapitre III: Avantages des modes de réalisation décrits :_

Le fait de masquer les données qui transitent sur le bus interne du système 2 rend plus difficile les attaques par canaux auxiliaires car elles sont masquées et le masque $M_j$ nécessaire pour les démasquer ne peut pas facilement être reconstruit à partir seulement du vecteur $iv_j$. De plus, ce masque $M_j$ change à chaque fois que la donnée $D_j$ est chargée pour la première fois dans les mémoires caches du système 2. Le fait d'enregistrer dans les mémoires caches internes, seulement le vecteur $iv_j$ utilisé pour reconstruire le masque $M_j$ et non pas le masque $M_j$ complet permet de limiter l'espace mémoire nécessaire pour stocker ce masque $M_j$. Ainsi, l'espace mémoire nécessaire pour la mise en œuvre de ce procédé reste limité.

Le fait de produire le nouveau masque $M_j$ à partir de l'adresse $@_j$ de la donnée $D_j$ à masquer ou à démasquer augmente la variabilité des masques produits. Cela améliore donc la protection contre les attaques par canaux auxiliaires.

Le fait de produire le nouveau masque $M_j$ en plus à partir de valeurs de l'identifiant ASID et/ou des métadonnées $MP_j$ permet d'augmenter la variabilité du masque $M_j$ et donc d'améliorer la protection contre les attaques par canaux auxiliaires.

Le fait de démasquer la donnée masquée $D_j{}^M$ juste avant de l'enregistrer sur le support 10 puis de la chiffrer permet de limiter l'espace mémoire utilisé. En effet, dans un tel cas, il n'est pas nécessaire d'enregistrer le vecteur $iv_j$ sur le support 10.

Le fait que la donnée $D_j$ soit traitée par l'unité centrale 20 sous forme masquée permet d'accroître la sécurité car même au sein de cette unité centrale 20, la donnée est protégée. De plus, cela rend plus difficile les attaques par canaux auxiliaires car même sur le bus 60 la donnée est masquée.

Le fait de démasquer la donnée masquée $D_j{}^M$ uniquement en réponse à la lecture de cette donnée dans la mémoire cache 26 par l'unité centrale 20 permet, en utilisant uniquement et seulement le circuit 22 de protection, de protéger les données écrites contre les attaques par canaux auxiliaires et d'assurer la confidentialité de ces données lorsqu'elles sont par la suite déplacées vers des mémoires de rang supérieur. En effet, quelle que soit la mémoire de rang supérieur, dans un tel cas, en absence de démasquage, les données y sont stockées sous forme masquée.

Le fait d'utiliser la composition d'au moins une permutation p() et d'au moins une substitution s() pour générer le masque $M_j$ permet de maximiser l'entropie de ce masque et donc de rendre plus difficile les attaques par canaux auxiliaires.

## Revendications

**1.** Procédé de protection, contre les attaques par canaux auxiliaires, d'un calculateur électronique comportant :

- un support de stockage d'informations,

- un système sur puce comportant :

- une mémoire cache interne divisée en plusieurs mots,
- une unité centrale de traitement apte à écrire une donnée dans un mot de la mémoire cache interne,
- un bus interne de données par l'intermédiaire duquel transitent les mots déplacés entre la mémoire cache interne et le support de stockage d'informations, la taille de ce bus étant égale à la taille d'un mot de la mémoire cache interne,

ce procédé comportant les étapes suivantes :

a) la protection (140) d'une donnée contenue dans un mot qui transite, par l'intermédiaire du bus interne, entre la mémoire cache interne et le support de stockage d'informations, en exécutant, pour chaque donnée écrite dans la mémoire cache interne par l'unité centrale de traitement, les opérations suivantes :

- opération A) : la construction d'un nouveau masque dont la taille, en nombre de bits, est égale au nombre de bits de la donnée à écrire, puis
- opération B) : le masquage (148) de la donnée à écrire à l'aide du nouveau masque construit pour obtenir une donnée masquée, puis
- opération C) : l'enregistrement (150) de la donnée masquée, et non pas de la donnée à écrire non-masquée, dans un mot de la mémoire cache interne, puis
- opération D) : lorsque cette donnée doit être déplacée vers le support de stockage d'informations, le dépôt (154) sur le bus interne du mot complet contenant la donnée masquée,

b) le démasquage (160, 190) de la donnée masquée contenue dans un mot,

**caractérisé en ce que** :

- l'opération A) de construction d'un nouveau masque comporte :

- la génération (144) d'un nouveau vecteur d'initialisation dont la taille, en nombre de bits, est deux fois inférieure au nombre de bits de la nouvelle donnée à écrire, puis
- la production (146) du nouveau masque à partir du nouveau vecteur d'initialisation généré et d'une clef secrète et en exécutant une fonction cryptographique,

- l'opération C) d'enregistrement (150) de la donnée masquée dans un mot de la mémoire cache interne, comporte l'enregistrement, dans ce même mot de la mémoire cache interne, du vecteur d'initialisation à l'aide duquel cette donnée masquée a été obtenue et l'absence d'enregistrement dans la mémoire cache interne du nouveau masque complet produit,

- l'étape b) de démasquage comporte les opérations suivantes :

- opération E) : l'extraction (162) du vecteur d'initialisation contenu dans le mot,

- opération F) : la reconstruction (164) du masque dont la taille, en nombre de bits, est égale au nombre de bits de la donnée à démasquer à partir du vecteur d'initialisation extrait et de la clef secrète et en exécutant la même fonction cryptographique que celle utilisée lors de l'opération A), puis

- opération G) : le démasquage (166) de la donnée masquée à l'aide du nouveau masque ainsi reconstruit pour obtenir la donnée démasquée.

2. Procédé selon la revendication 1, dans lequel, lors de l'opération A), la production (146) du nouveau masque est réalisée, en plus, à partir d'au moins une partie de l'adresse physique de la donnée à écrire.

3. Procédé selon l'une quelconque des revendications précédentes, dans lequel, lors de l'opération A), la production (146) du nouveau masque est réalisée, en plus, à partir d'une ou plusieurs des valeurs appartenant au groupe constitué :

- d'une valeur qui varie en fonction du processus en cours d'exécution par le système sur puce,
- d'une métadonnée contenue dans le même mot que celui qui contient la donnée à masquer, cette métadonnée étant contenue dans une plage de bits distincte de la plage de bits de ce mot contenant la donnée à masquer, et
- d'une valeur codée par des bits associés à l'adresse de la donnée à masquer, ces bits étant différents des bits codant l'adresse de la donnée à masquer.

4. Procédé selon l'une quelconque des revendications précédentes, dans lequel le procédé comporte :

- juste avant l'enregistrement d'une donnée sur le support de stockage d'informations :

- l'exécution de l'étape b) (160) pour démasquer la donnée masquée contenue dans le mot qui a transité par l'intermédiaire du bus interne de données et ainsi obtenir une donnée démasquée, et
- le chiffrement (170) de la donnée démasquée, pour obtenir une donnée chiffrée, puis

- l'enregistrement (174), sur le support de stockage d'informations, de cette donnée chiffrée sans enregistrer sur ce support le vecteur d'initialisation utilisé pour démasquer cette donnée, puis ultérieurement
- après le chargement de la donnée chiffrée à partir du support de stockage d'information et avant le déplacement de cette donnée par l'intermédiaire du bus interne de données :

- le déchiffrement (182) de la donnée chiffrée enregistrée sur le support de stockage d'informations, pour obtenir une donnée déchiffrée, et
- le masquage (186) de la donnée déchiffrée, ce masquage comportant :

- la génération (144) d'un nouveau vecteur d'initialisation dont la taille, en nombre de bits, est deux fois inférieure au nombre de bits de la donnée déchiffrée, puis
- la production (146) d'un nouveau masque à partir du nouveau vecteur d'initialisation généré et à partir de la même clef secrète et en exécutant la même fonction cryptographique que celles utilisées lors de l'étape a), puis
- le masquage (148) de la donnée déchiffrée à l'aide du nouveau masque produit pour obtenir une donnée masquée, puis

- le déplacement, par l'intermédiaire du bus interne de données, d'un mot contenant la donnée masquée et le vecteur d'initialisation à l'aide duquel cette donnée masquée a été obtenue, puis
- l'enregistrement, dans la mémoire cache interne, de ce mot déplacé contenant la donnée masquée et le vecteur d'initialisation à l'aide duquel cette donnée masquée a été obtenue.

5. Procédé selon l'une quelconque des revendications précédentes, dans lequel le procédé comporte :

- la lecture, par l'unité centrale de traitement, d'une donnée dans un mot de la mémoire cache interne, et

- en réponse à cette lecture par l'unité centrale de traitement :

- la reconstruction (164) du masque dont la taille, en nombre de bits, est égale au nombre de bits de la donnée à démasquer à partir du vecteur d'initialisation contenu dans le mot et de la clef secrète et en exécutant la même fonction cryptographique, puis
- la transmission (204) de la donnée masquée et du masque produit à l'unité centrale de traitement, puis

- l'exécution (130), par l'unité centrale de traitement, d'un traitement sur la donnée masquée pour obtenir une donnée traitée masquée et du même traitement sur le masque reconstruit pour obtenir un masque traitée, puis
- l'exécution de l'étape a) de protection pour la donnée traitée en exécutant, en plus, entre les opérations B) et C), une opération (206) de démasquage, à l'aide du masque traitée, de la donnée traitée doublement masquée obtenue à l'issue de l'opération B) pour obtenir la donnée masquée enregistrée lors de l'opération C).

6. Procédé selon l'une quelconque des revendications 1 à 3, dans lequel le procédé comporte :

- la lecture, par l'unité centrale de traitement, d'une donnée dans un mot de la mémoire cache interne, et,

- uniquement en réponse à cette lecture par l'unité centrale de traitement :

- l'exécution de l'étape b) (190) pour démasquer la donnée masquée contenue dans ce mot, puis
- la transmission de la donnée démasquée obtenue à l'unité centrale de traitement.

7. Procédé selon l'une quelconque des revendications précédentes, dans lequel la fonction cryptographique comporte une fonction de permutation et une fonction de substitution.

8. Procédé selon l'une quelconque des revendications précédentes, dans lequel l'opération B) de masquage d'une donnée et l'opération G) de démasquage d'une donnée masqué consiste chacune à réaliser une opération "OU Exclusif" entre la donnée et le masque produit.

9. Calculateur électronique pour la mise en œuvre d'un procédé conforme à l'une quelconque des revendications précédentes, ce calculateur électronique comportant :

- un support (10) de stockage d'informations,
- un système (2) sur puce comportant :

- une mémoire cache interne (26, 30) divisée en plusieurs mots,
- une unité centrale de traitement (50) apte à écrire une donnée dans un mot de la mémoire cache interne,
- un bus interne (110) de données par l'intermédiaire duquel transitent les mots déplacés entre la mémoire cache interne et le support de stockage d'informations, la taille de ce bus étant égale à la taille d'un mot de la mémoire cache interne,
- un premier module matériel (76) de masquage d'une donnée contenue dans un mot qui transite, par l'intermédiaire du bus interne, entre la mémoire cache interne et le support de stockage d'informations, ce premier module matériel (76) de masquage étant configuré pour exécuter, pour chaque donnée écrite dans la mémoire cache interne par l'unité centrale de traitement, les opérations suivantes

- opération A) : la construction d'un nouveau masque dont la taille, en nombre de bits, est égale au nombre de bits de la donnée à écrire, puis
- opération B) : le masquage de la donnée à écrire à l'aide du nouveau masque construit pour obtenir une donnée masquée, puis
- opération C) : l'enregistrement de la donnée masquée, et non pas de la donnée à écrire non-masquée, dans un mot de la mémoire cache interne, puis

- un premier module matériel (78) de démasquage apte à démasquer la donnée masquée contenue dans un mot,
dans lequel la mémoire cache interne est configurée pour, lorsqu'une donnée doit être déplacée vers le support de stockage d'informations, déposer sur le bus interne le mot complet contenant la donnée masquée,
**caractérisé en ce que** :

- l'opération A) de construction d'un nouveau masque comporte :

- la génération d'un nouveau vecteur d'initialisation dont la taille, en nombre de bits, est deux fois inférieure au nombre de bits de la nouvelle donnée à écrire, puis

- la production du nouveau masque à partir du nouveau vecteur d'initialisation généré et d'une clef secrète et en exécutant une fonction cryptographique,

- l'opération C) d'enregistrement de la donnée masquée dans un mot de la mémoire cache interne, comporte l'enregistrement, dans ce même mot de la mémoire cache interne, du vecteur d'initialisation à l'aide duquel cette donnée masquée a été obtenue et l'absence d'enregistrement dans la mémoire cache interne du nouveau masque complet produit,
- le premier module matériel (78) de démasquage est configuré pour exécuter les opérations suivantes :

- opération E) : l'extraction du vecteur d'initialisation contenu dans le mot,
- opération F) : la reconstruction du masque dont la taille, en nombre de bits, est égale au nombre de bits de la donnée à démasquer à partir du vecteur d'initialisation extrait et de la clef secrète et en exécutant la même fonction cryptographique que celle utilisée lors de l'opération A), puis
- opération G) : le démasquage de la donnée masquée à l'aide du nouveau masque ainsi reconstruit pour obtenir la donnée démasquée.

**10.** Calculateur selon la revendication 9, dans lequel le premier module matériel (76) de masquage et le premier module matériel (78) de démasquage sont interposés entre l'unité centrale (50) de traitement et la mémoire cache interne (26) pour masquer chaque donnée écrite par l'unité centrale de traitement dans la mémoire cache interne et pour démasquer chaque donnée lue dans la mémoire cache interne par l'unité centrale de traitement.

**11.** Calculateur selon la revendication 10, dans lequel le calculateur comporte un second module matériel (106) de masquage et un second module matériel (108) de démasquage interposés entre le support de stockage d'informations et le bus interne (110), le second module matériel (108) de démasquage étant apte à démasquer chaque donnée avant qu'elle soit enregistrée dans le support de stockage d'informations et le second module matériel (106) de masquage étant apte à masquer chaque donnée lue dans le support de stockage d'information avant qu'elle soit déposée sur le bus interne.

**Patentansprüche**

**1.** Verfahren zum Schutz vor Seitenkanalangriffen auf einen elektronischen Rechner, der umfasst:

- ein Informationsspeichermedium,
- ein System auf einem Chip, umfassend:

- einen internen Cache-Speicher, der in mehrere Wörter unterteilt ist,
- eine zentrale Verarbeitungseinheit, die in der Lage ist, ein Datum in ein Wort des internen Cache-Speichers zu schreiben,
- einen internen Datenbus, über den die zwischen dem internen Cache-Speicher und dem Informationsspeichermedium verschobenen Wörter übertragen werden, wobei die Größe dieses Busses gleich der Größe eines Worts des internen Cache-Speichers ist;

wobei dieses Verfahren die folgenden Schritte aufweist:

a) das Schützen (140) eines Datums, das in einem Wort enthalten ist, das über den internen Bus zwischen dem internen Cache-Speicher und dem Informationsspeichermedium übertragen wird, indem für jedes Datum, das von der zentralen Verarbeitungseinheit in den internen Cache-Speicher geschrieben wird, die folgenden Operationen ausgeführt werden:

- Operation A): das Konstruieren einer neuen Maske, deren Größe, in der Bitanzahl, gleich der Bitanzahl des zu schreibenden Datums ist, dann
- Operation B): das Maskieren (148) des zu schreibenden Datums mithilfe der konstruierten neuen Maske, um ein maskiertes Datum zu erhalten, dann
- Operation C): das Speichern (150) des maskierten Datums und nicht des unmaskierten zu schreibenden Datums in ein Wort des internen Cache-Speichers, dann
- Operation D): wenn dieses Datum zu dem Informationsspeichermedium verschoben werden muss, das Ablegen (154) des kompletten Worts, welches das maskierte Datum enthält, auf dem internen Bus,

b) das Demaskieren (160, 190) des in einem Wort enthaltenen maskierten Datums,

**dadurch gekennzeichnet, dass**:

- die Operation A) des Konstruierens einer neuen Maske umfasst:

- das Generieren (144) eines neuen Initialisierungsvektors, dessen Größe, in der Bitanzahl, halb so groß wie die Bitanzahl des zu schreibenden neuen Datums ist, dann
- das Erzeugen (146) der neuen Maske ausgehend von dem generierten neuen Initialisierungsvektor und von einem geheimen Schlüssel und unter Ausführung einer kryptografischen Funktion,

- die Operation C) des Speicherns (150) des maskierten Datums in ein Wort des internen Cache-Speichers das Speichern, in dasselbe Wort des internen Cache-Speichers, des Initialisierungsvektors, mit dessen Hilfe dieses maskierte Datum erhalten worden ist, und das Nicht-Speichern der erzeugten kompletten neuen Maske in dem internen Cache-Speicher umfasst,
- der Schritt b) des Demaskierens die folgenden Operationen umfasst:

- Operation E): das Extrahieren (162) des in dem Wort enthaltenen Initialisierungsvektors,
- Operation F): das Rekonstruieren (164) der Maske, deren Größe, in der Bitanzahl, gleich der Bitanzahl des zu demaskierenden Datums ist, ausgehend von dem extrahierten Initialisierungsvektor und von dem geheimen Schlüssel und unter Ausführung der gleichen kryptografischen Funktion wie die, die bei der Operation A) verwendet wurde, dann
- Operation G): das Demaskieren (166) des maskierten Datums mithilfe der so rekonstruierten neuen Maske, um das demaskierte Datum zu erhalten.

2. Verfahren nach Anspruch 1, wobei bei der Operation A) das Erzeugen (146) der neuen Maske zusätzlich ausgehend von mindestens einem Teil der physischen Adresse des zu schreibenden Datums ausgeführt wird.

3. Verfahren nach einem der vorhergehenden Ansprüche, wobei bei der Operation A) das Erzeugen (146) der neuen Maske zusätzlich ausgehend von einen oder mehreren der Werte ausgeführt wird, die zu der Gruppe gehören, die aus Folgendem besteht:

- einem Wert, der in Abhängigkeit von dem Prozess variiert, der von dem System auf einem Chip gerade ausgeführt wird,
- einem Metadatum, das in demselben Wort enthalten ist wie dem, welches das zu maskierende Datum enthält, wobei dieses Metadatum in einem Bitbereich enthalten ist, der verschieden von dem Bitbereich dieses Worts ist, welches das zu maskierende Datum enthält, und
- einem Wert, der durch Bits codiert ist, die der Adresse des zu maskierenden Datums zugeordnet sind, wobei dieses Bits verschieden von den Bits sind, welche die Adresse des zu maskierenden Datums codieren.

4. Verfahren nach einem der vorhergehenden Ansprüche, wobei das Verfahren umfasst:

- unmittelbar vor dem Speichern eines Datums auf dem Informationsspeichermedium:

- das Durchführen des Schritts b) (160), um das maskierte Datum zu demaskieren, das in dem Wort enthalten ist, das über den internen Datenbus übertragen worden ist, und so ein demaskiertes Datum zu erhalten, und
- das Verschlüsseln (170) des demaskierten Datums, um ein verschlüsseltes Datum zu erhalten, dann

- das Speichern (174), auf dem Informationsspeichermedium, dieses verschlüsselten Datums, ohne auf diesem Medium den zum Demaskieren dieses Datums verwendeten Initialisierungsvektor zu speichern, dann anschließend
- nach dem Laden des verschlüsselten Datums ausgehend von dem Informationsspeichermedium und vor dem Verschieben dieses Datums über den internen Datenbus:

- das Entschlüsseln (182) des auf dem Informationsspeichermedium gespeicherten verschlüsselten Datums, um ein entschlüsseltes Datum zu erhalten, und
- das Maskieren (186) des entschlüsselten Datums, wobei dieses Maskieren umfasst:

- das Generieren (144) eines neuen Initialisierungsvektors, dessen Größe, in der Bitanzahl, halb so groß wie die Bitanzahl des entschlüsselten Datums ist, dann
- das Erzeugen (146) einer neuen Maske ausgehend von dem generierten neuen Initialisierungsvektor und ausgehend von demselben geheimen Schlüssel und unter Ausführung der gleichen kryptografischen Funktion wie die, die bei dem Schritt a) verwendet wurden, dann
- das Maskieren (148) des entschlüsselten Datums mithilfe der erzeugten neuen Maske, um ein maskiertes Datum zu erhalten, dann

- das Verschieben, über den internen Datenbus, eines Worts, welches das maskierte Datum und den Initialisierungsvektor, mit dessen Hilfe dieses maskierte Datum erhalten worden ist, enthält, dann
- das Speichern, in dem internen Cache-Speicher, dieses verschobenen Worts, welches das maskierte Datum und den Initialisierungsvektor, mit dessen Hilfe dieses maskierte Datum erhalten worden ist, enthält.

5. Verfahren nach einem der vorhergehenden Ansprüche, wobei das Verfahren umfasst:

- das Lesen, durch die zentrale Verarbeitungseinheit, eines Datums in einem Wort des internen Cache-Speichers, und
- als Reaktion auf dieses Lesen durch die zentrale Verarbeitungseinheit:

- das Rekonstruieren (164) der Maske, deren Größe, in der Bitanzahl, gleich der Bitanzahl des zu demaskierenden Datums ist, ausgehend von dem in dem Wort enthaltenen Initialisierungsvektor und von dem geheimen Schlüssel und unter Ausführung der gleichen kryptografischen Funktion, dann
- das Übertragen (204) des maskierten Datums und der erzeugten Maske an die zentrale Verarbeitungseinheit, dann

- das Durchführen (130), durch die zentrale Verarbeitungseinheit, einer Verarbeitung an dem maskierten Datum, um ein verarbeitetes maskiertes Datum zu erhalten, und der gleichen Verarbeitung an der rekonstruierten Maske, um eine verarbeitete Maske zu erhalten, dann
- das Durchführen des Schritts a) des Schützens für das verarbeitete Datum, indem zusätzlich zwischen den Operationen B) und C) eine Operation (206) des Demaskierens, mithilfe der verarbeiteten Maske, des nach dem Schritt B erhaltenen zweifach maskierten verarbeiteten Datums durchgeführt wird, um das bei der Operation C) gespeicherte maskierte Datum zu erhalten.

6. Verfahren nach einem der Ansprüche 1 bis 3, wobei das Verfahren umfasst:

- das Lesen, durch die zentrale Verarbeitungseinheit, eines Datums in einem Wort des internen Cache-Speichers, und
- nur als Reaktion auf dieses Lesen durch die zentrale Verarbeitungseinheit:

- das Durchführen des Schritts b) (190), um das in diesem Wort enthaltene maskierte Datum zu demaskieren, dann
- das Übertragen des erhaltenen demaskierten Datums an die zentrale Verarbeitungseinheit.

7. Verfahren nach einem der vorhergehenden Ansprüche, wobei die kryptografische Funktion eine Permutationsfunktion und eine Substitutionsfunktion umfasst.

8. Verfahren nach einem der vorhergehenden Ansprüche, wobei die Operation B) des Maskierens eines Datums und die Operation G) des Demaskierens eines maskierten Datums jeweils darin bestehen, eine "XOR"-Operation zwischen dem Datum und der erzeugten Maske auszuführen.

9. Elektronischer Rechner zur Implementierung eines Verfahrens nach einem der vorhergehenden Ansprüche, wobei dieser elektronische Rechner umfasst:

- ein Informationsspeichermedium (10),
- ein System (2) auf einem Chip, umfassend:

- einen internen Cache-Speicher (26, 30), der in mehrere Wörter unterteilt ist,
- eine zentrale Verarbeitungseinheit (50), die in der Lage ist, ein Datum in ein Wort des internen Cache-Speichers zu schreiben,
- einen internen Datenbus (110), über den die zwischen dem internen Cache-Speicher und dem Informationsspeichermedium verschobenen Wörter übertragen werden, wobei die Größe dieses Busses gleich der Größe eines Worts des internen Cache-Speichers ist;
- ein erstes Hardware-Modul (76) zur Maskierung eines Datums, das in einem Wort enthalten ist, das über den internen Bus zwischen dem internen Cache-Speicher und dem Informationsspeichermedium übertragen wird, wobei dieses erste Hardware-Modul (76) zur Maskierung dazu ausgelegt ist, für jedes Datum, das von der zentralen Verarbeitungseinheit in den internen Cache-Speicher geschrieben wird, die folgenden Operationen durchzuführen:

- Operation A): das Konstruieren einer neuen Maske, deren Größe, in der Bitanzahl, gleich der Bitanzahl des zu schreibenden Datums ist, dann
- Operation B): das Maskieren des zu schreibenden Datums mithilfe der konstruierten neuen Maske, um ein maskiertes Datum zu erhalten, dann
- Operation C): das Speichern des maskierten Datums und nicht des unmaskierten zu schreibenden Datums in ein Wort des internen Cache-Speichers, dann

- ein erstes Hardware-Modul (78) zur Demaskierung, das in der Lage ist, das in einem Wort enthaltene maskierte Datum zu demaskieren, wobei der interne Cache-Speicher dazu ausgelegt ist, wenn ein Datum zu dem Informationsspeichermedium verschoben werden muss, das komplette Wort, welches das maskierte Datum enthält, auf dem internen Bus abzulegen, **dadurch gekennzeichnet, dass**:

- die Operation A) des Konstruierens einer neuen Maske umfasst:

- das Generieren eines neuen Initialisierungsvektors, dessen Größe, in der Bitanzahl, halb so groß wie die Bitanzahl des zu schreibenden neuen Datums ist, dann
- das Erzeugen der neuen Maske ausgehend von dem generierten neuen Initialisierungsvektor und von einem geheimen Schlüssel und unter Ausführung einer kryptografischen Funktion,

- die Operation C) des Speicherns des maskierten Datums in ein Wort des internen Cache-Speichers das Speichern, in dasselbe Wort des internen Cache-Speichers, des Initialisierungsvektors, mit dessen Hilfe dieses maskierte Datum erhalten worden ist, und das Nicht-Speichern der erzeugten kompletten neuen Maske in dem internen Cache-Speicher umfasst,
- das erste Hardware-Modul (78) zur Demaskierung dazu ausgelegt ist, die folgenden Operationen durchzuführen:

- Operation E): das Extrahieren des in dem Wort enthaltenen Initialisierungsvektors,
- Operation F): das Rekonstruieren der Maske, deren Größe, in der Bitanzahl, gleich der Bitanzahl des zu demaskierenden Datums ist, ausgehend von dem extrahierten Initialisierungsvektor und von dem geheimen Schlüssel und unter Ausführung der gleichen kryptografischen Funktion wie die, die beim Schritt A) verwendet wurde, dann
- Operation G): das Demaskieren des maskierten Datums mithilfe der so rekonstruierten neuen Maske, um das demaskierte Datum zu erhalten.

**10.** Rechner nach Anspruch 9, wobei das erste Hardware-Modul (76) zur Maskierung und das erste Hardware-Modul (78) zur Demaskierung zwischen der zentralen Verarbeitungseinheit (50) und dem internen Cache-Speicher (26) angeordnet sind, um jedes von der zentralen Verarbeitungseinheit in den internen Cache-Speicher geschriebene Datum zu maskieren und um jedes von der zentralen Verarbeitungseinheit in dem internen Cache-Speicher gelesene Datum zu demaskieren.

**11.** Rechner nach Anspruch 10, wobei der Rechner ein zweites Hardware-Modul (106) zur Maskierung und ein zweites Hardware-Modul (108) zur Demaskierung umfasst, die zwischen dem Informationsspeichermedium und dem internen Bus (110) angeordnet sind, wobei das zweite Hardware-Modul (108) zur Demaskierung in der Lage ist, jedes Datum zu demaskieren, bevor es in dem Informationsspeichermedium gespeichert wird, und wobei das zweite Hardware-Modul (106) zur Maskierung in der Lage ist, jedes in dem Informationsspeichermedium gelesene Datum zu maskieren, bevor es auf dem internen Bus abgelegt wird.

**Claims**

**1.** Method for protecting, against side-channel attacks, an electronic computer comprising:

- a data storage medium,
- a system-on-chip comprising:

- an internal cache memory divided into a plurality of words,
- a central processing unit able to write a datum to a word of the internal cache memory,
- an internal data bus through which transit words moved between the internal cache memory and the data storage medium, the size of this bus being equal to the size of one word of the internal cache memory,

this method comprising the following steps:

a) protecting (140) a datum contained in a word transiting, through the internal bus, between the internal cache memory and the data storage medium, by executing, for each datum written to the internal cache memory by the central processing unit, the following operations:

- operation A): constructing a new mask the size of which, in number of bits, is equal to the number of bits of the datum to be written, then
- operation B): masking (148) the datum to be written using the constructed new mask, to obtain a masked datum, then
- operation C): storing (150) the masked datum, and not the unmasked datum to be written, in a word of the internal cache memory, then
- operation D): when this datum must be moved to the data storage medium, depositing (154), on the internal bus, the complete word containing the masked datum,

b) unmasking (160, 190) the masked datum contained in a word,

**characterized in that**:

- operation A) of constructing a new mask comprises:

- generating (144) a new initialization vector the size of which, in number of bits, is two times smaller than the number of bits of the new datum to be written, then
- producing (146) the new mask using the generated new initialization vector and using a secret key and by executing a cryptographic function,

- operation C) of storing (150) the masked datum in a word of the internal cache memory comprises storing, in the same word of the internal cache memory, the initialization vector by means of which this masked datum was obtained, and not storing, in the internal cache memory, the produced complete new mask,
- unmasking step b) comprises the following operations:

- operation E): extracting (162) the initialization vector contained in the word,
- operation F): reconstructing (164) the mask the size of which, in number of bits, is equal to the number of bits of the datum to be unmasked using the extracted initialization vector and using the secret key and by executing the same cryptographic function as that used in operation A), then
- operation G): unmasking (166) the masked datum using the new mask thus reconstructed, to obtain the unmasked datum.

2. Method according to Claim 1, wherein, in operation A), the new mask is produced (146), in addition, using at least one portion of the physical address of the datum to be written.

3. Method according to either one of the preceding claims, wherein, in operation A), the new mask is produced (146), in addition, using one or more values belonging to the group consisting:

- of a value that varies depending on the process in course of execution by the system-on-chip,
- of a metadatum contained in the same word as the word that contains the datum to be masked, this metadatum being contained in a range of bits that is distinct from the range of bits of this word containing the datum to be masked, and
- of a value coded by bits associated with the address of the datum to be masked, these bits being different from the bits coding the address of the datum to be masked.

4. Method according to any one of the preceding claims, wherein the method comprises:

- just before storage of a datum on the data storage medium:

- executing step b) (160) to unmask the masked datum contained in the word that has transited through the internal data bus and to obtain thus an unmasked datum, and
- encrypting (170) the unmasked datum, to obtain an encrypted datum, then

- storing (174), on the data storage medium, this encrypted datum without storing, on this medium, the initialization vector used to unmask this datum, then subsequently
- after the encrypted datum has been loaded from the data storage medium and before this datum is moved through the internal data bus:

- decrypting (182) the encrypted datum stored on the data storage medium, to obtain a decrypted datum, and
- masking (186) the decrypted datum, this masking comprising:

  - generating (144) a new initialization vector the size of which, in number of bits, is two times smaller than the number of bits of the decrypted datum, then
  - producing (146) a new mask using the generated new initialization vector, and using the same secret key and by executing the same cryptographic function as those used in step a), then
  - masking (148) the decrypted datum using the produced new mask, to obtain a masked datum, then

- moving, through the internal data bus, a word containing the masked datum and the initialization vector by means of which this masked datum was obtained, then
- storing, in the internal cache memory, this moved word containing the masked datum and the initialization vector by means of which this masked datum was obtained.

5. Method according to any one of the preceding claims, wherein the method comprises:

   - read-out, by the central processing unit, of a datum in a word of the internal cache memory, and
   - in response to this read-out by the central processing unit:

     - reconstruction (164) of the mask the size of which, in number of bits, is equal to the number of bits of the datum to be unmasked using the initialization vector contained in the word and using the secret key and by executing the same cryptographic function, then
     - transmission (204) of the masked datum and of the produced mask to the central processing unit, then

   - execution (130), by the central processing unit, of a processing operation on the masked datum to obtain a processed masked datum and of the same processing operation on the reconstructed mask to obtain a processed mask, then
   - execution of protecting step a) on the processed datum, this involving execution, in addition, between operations B) and C), of an operation (206) of unmasking, using the processed mask, the doubly masked processed datum obtained at the end of operation B), to obtain the masked datum stored in operation C).

6. Method according to any one of Claims 1 to 3, wherein the method comprises:

   - read-out, by the central processing unit, of a datum in a word of the internal cache memory, and
   - solely in response to this read-out by the central processing unit:

     - execution of step b) (190) to unmask the masked datum contained in this word, then
     - transmission of the obtained unmasked datum to the central processing unit.

7. Method according to any one of the preceding claims, wherein the cryptographic function comprises a permutation function and a substitution function.

8. Method according to any one of the preceding claims, wherein operation B) of masking a datum and operation G) of unmasking a masked datum each consist in performing an "Exclusive OR" operation between the datum and the produced mask.

9. Electronic computer for implementing a method according to any one of the preceding claims, this electronic computer comprising:

   - a data storage medium (10),
   - a system-on-chip (2) comprising:

     - an internal cache memory (26, 30) divided into a plurality of words,
     - a central processing unit (50) able to write a datum to a word of the internal cache memory,
     - an internal data bus (110) through which transit words moved between the internal cache memory and the data storage medium, the size of this bus being equal to the size of one word of the internal cache memory,
     - a first hardware module (76) for masking a datum contained in a word transiting, through the internal bus, between the internal cache memory and the data storage medium, this first masking hardware module (76) being configured to execute, for each datum written to the internal cache memory by the central processing unit, the following operations:

       - operation A): constructing a new mask the size of which, in number of bits, is equal to the number of bits of the datum to be written, then
- operation B): masking the datum to be written using the constructed new mask, to obtain a masked datum, then
- operation C): storing the masked datum, and not the unmasked datum to be written, in a word of the internal cache memory, then

- a first unmasking hardware module (78) able to unmask the masked datum contained in a word, wherein the internal cache memory is configured to, when a datum must be moved to the data storage medium, deposit, on the internal bus, the complete word containing the masked datum,
**characterized in that**:

- operation A) of constructing a new mask comprises:

- generating a new initialization vector the size of which, in number of bits, is two times smaller than the number of bits of the new datum to be written, then
- producing the new mask using the generated new initialization vector and using a secret key and by executing a cryptographic function,

- operation C) of storing the masked datum in a word of the internal cache memory comprises storing, in the same word of the internal cache memory, the initialization vector by means of which this masked datum was obtained, and not storing, in the internal cache memory, the produced complete new mask,
- the first unmasking hardware module (78) is configured to execute the following operations:

- operation E): extracting the initialization vector contained in the word,
- operation F): reconstructing the mask the size of which, in number of bits, is equal to the number of bits of the datum to be unmasked using the extracted initialization vector and using the secret key and by executing the same cryptographic function as that used in operation A), then
- operation G): unmasking the masked datum using the new mask thus reconstructed, to obtain the unmasked datum.

10. Computer according to Claim 9, wherein the first masking hardware module (76) and the first unmasking hardware module (78) are interposed between the central processing unit (50) and the internal cache memory (26) in order to mask each datum written by the central processing unit to the internal cache memory and to unmask each datum read from the internal cache memory by the central processing unit.

11. Computer according to Claim 10, wherein the computer comprises a second masking hardware module (106) and a second unmasking hardware module (108) that are interposed between the data storage medium and the internal bus (110), the second unmasking hardware module (108) being able to unmask each datum before it is stored in the data storage medium and the second masking hardware module (106) being able to mask each datum read from the data storage medium before it is deposited on the internal bus.

Fig. 1

Fig. 3

Fig. 2

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012297110 A1
- US 2017214523 A1
- US 5859912 A
- US 2019349187 A1
- US 20210004456 A1

**Littérature non-brevet citée dans la description**

- **DAEMNEN et al.** *The Subterranean 2.0 Cipher suite*, 29 March 2019